(19) Europäisches Patentamt / European Patent Office / Office européen des brevets

(11) **EP 3 594 278 B1**

(12) **EUROPEAN PATENT SPECIFICATION**

(45) Date of publication and mention of the grant of the patent:
**12.06.2024 Bulletin 2024/24**

(21) Application number: **18763354.0**

(22) Date of filing: **05.03.2018**

(51) International Patent Classification (IPC):
*C08J 9/28* (2006.01)     *B32B 5/18* (2006.01)
*B32B 27/32* (2006.01)     *C08J 9/00* (2006.01)
*B29C 55/00* (2006.01)

(52) Cooperative Patent Classification (CPC):
**B29D 7/01; B32B 5/18; B32B 27/32; C08J 9/00;
C08J 9/28; H01M 50/417; H01M 50/449;
H01M 50/457; H01M 50/489; H01M 50/491;
H01M 50/494; B29C 55/005; B29C 55/02;
B29K 2023/00; B29K 2105/041;**          (Cont.)

(86) International application number:
**PCT/JP2018/008334**

(87) International publication number:
**WO 2018/164056 (13.09.2018 Gazette 2018/37)**

(54) **POLYOLEFIN MICROPOROUS FILM**

MIKROPORÖSE POLYOLEFINSCHICHT

FILM MICROPOREUX POLYOLÉFINIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2017 JP 2017044210**

(43) Date of publication of application:
**15.01.2020 Bulletin 2020/03**

(73) Proprietor: **Toray Industries, Inc.**
**Tokyo 103-8666 (JP)**

(72) Inventors:
• **CHEN, Yanzi**
**Nasushiobara-shi**
**Tochigi 329-2763 (JP)**
• **KANEDA, Toshihiko**
**Nasushiobara-shi**
**Tochigi 329-2763 (JP)**
• **NISHIMURA, Naoya**
**Otsu-shi**
**Shiga 520-8558 (JP)**

(74) Representative: **Mewburn Ellis LLP**
**Aurora Building**
**Counterslip**
**Bristol BS1 6BX (GB)**

(56) References cited:
**EP-A1- 1 920 920        EP-A1- 2 604 646
EP-A1- 2 866 278        EP-B1- 1 920 920
WO-A1-2007/117042     WO-A1-2009/028734
WO-A1-2015/029944     WO-A1-2015/194504
WO-A2-2010/027065     JP-A- 2004 149 637
JP-A- 2012 501 357      JP-A- 2015 228 358
US-A1- 2009 226 814    US-A1- 2013 302 696**

EP 3 594 278 B1

(52) Cooperative Patent Classification (CPC): (Cont.)
B29L 2031/3468; C08J 2323/06; C08J 2323/10;
H01M 10/0525; H01M 50/403; H01M 50/406;
H01M 50/451; Y02E 60/10

**Description**

The present invention relates to polyolefin microporous membranes.

BACKGROUND ART

Microporous membranes are used in various applications including: filters such as membrane filters and dialysis membranes; battery separators; separators for electrolytic capacitors; and the like. Among others, microporous membranes composed of a resin material that is a polyolefin have excellent chemical resistance, insulating properties, and mechanical strength, and have shutdown characteristics, and accordingly have been used widely as separators for secondary batteries in recent years.

Secondary batteries, for example, lithium ion secondary batteries, have high energy density, and accordingly have been used widely as batteries for use in personal computers, mobile phones, and the like. In addition, secondary batteries are expected to be promising as power sources for driving a motor of an electric automobile or a hybrid car.

In recent years, secondary batteries have had a higher energy density, the electrodes have consequently had an increased volume, and accordingly, microporous membranes used as separators need to be thinner. However, a separator made of a thinner membrane has lower membrane strength and causes the battery to exhibit more self-discharge in some cases, and accordingly, the membrane strength and self-discharge characteristics need to be enhanced.

For example, Patent Literature 1 discloses a method in which a polyolefin resin and a solvent are mixed to form a polyolefin microporous membrane, wherein the plasticizer (solvent) and the like are extracted from the mixture, and then, the stretching speed is controlled within a specific range in a stretching step (secondary stretching: dry stretching), whereby the polyolefin microporous membrane is allowed to achieve suppressed self-discharge when used as a separator for lithium ion secondary batteries.

In addition, for example, Patent Literature 2 discloses a polyolefin microporous membrane composed of a resin composition containing 90 mass% or more polyolefin, wherein the polyolefin microporous membrane has a thermal shrinkage ratio of less than 30% in the width direction at 150°C and a tensile strength of 30 MPa or more in the longitudinal direction and width direction. This polyolefin microporous membrane is described as having excellent self-discharge characteristics.

In addition, for example, Patent Literature 3 discloses a microporous membrane containing a polyolefin and having a shutdown temperature of 133.0°C or less and a self-discharge capacity of 110.0 mAh or less. In addition, for example, Patent Literature 4 discloses a porous polypropylene film having 0.5 or less portions per 1 $m^2$ which have a transmitted beam volume 5 times or more as large as the average transmitted beam volume. This porous polypropylene film is described as having excellent self-discharge characteristics.

In the meantime, a separator in a secondary battery has a function to retain ion permeability and at the same time prevent short circuit between the cathode and the anode. However, it has been pointed out that the influence of the expansion and shrinkage of an electrode that are brought about by the charge and discharge of the battery causes the separator to undergo repeated pressuring and releasing caused by force load or the like in the thickness direction, and as a result, the deformation or ion permeability of the separator changes, possibly causing a decrease in battery characteristics. In view of this, it is necessary to inhibit such a decrease in battery characteristics and accordingly to inhibit the separator from undergoing a change in the deformation or ion permeability caused by the above-mentioned pressing.

In addition, in a production step of secondary batteries, electrode laminates are fabricated, for example, by laminating and rolling a cathode and an anode with a separator in between. When such an electrode laminate is fabricated, the electrodes and the separator may be pressured and compressed. In some cases, the compressed separator decreases in membrane thickness and air permeability, thus decreasing in rate characteristics, and increases in leakage current, thus decreasing in self-discharge characteristics. In particular, an increase in the volume of an electrode brought about by the higher capacity and higher density of secondary batteries in recent years has a tendency to cause a larger pressure to be applied to the separator during the fabrication of batteries. Hence, it is necessary to enhance the compressive resistance of separators as well as to produce them as thinner membranes, owing to the increased volume of the electrodes.

For example, Patent Literature 5 describes a polyolefin microporous membrane, wherein, when the polyolefin microporous membrane is compressed using a press machine at a pressure of 2.2 MPa at 90°C for five minutes and when the rate of variation of the membrane thickness is more than 15% with respect to the membrane thickness obtained before the compressing, the polyolefin microporous membrane used as a battery separator possibly causes short circuit and decreases the productivity for batteries owing to a decrease in yield. Patent Literature 6 describes a polyolefin microporous film in which the rate of change in the film thickness after 5 minutes of heat-compression at a temperature of 90°C and a pressure of 5.0 MPa is 10% or less in relation to the film thickness before the heat-compression. A film in Example 6 has a tensile strength of 216 MPa in the MD direction.

Citation List

Patent Literature 1: JP2014-162851A; Patent Literature 2: JP2013-256606A;
Patent Literature 3: WO2010/027065; Patent Literature 4: WO2010/107023
Patent Literature 5: WO2010/058789; and Patent Literature 6: WO2015/19504.

Further examples of polyolefin microporous films are provided in:

US2013/302696A, EP2604646A, WO2007/117042, US2009/226814A,
WO2009/028734, EP1920920, EP2866278, JP2015-194504A, JP2015-228358A and
JP2004-149627A.

SUMMARY OF INVENTION

Technical Problem

The above-mentioned Patent Literature 1 to 4 describes the polyolefin microporous membranes therein as achieving reduced self-discharge, but, in each item of the Patent Literature, the membrane thickness used in the Examples is approximately 20 $\mu$m, and accordingly, the polyolefin microporous membrane needs to achieve further enhancement of self-discharge characteristics in cases where the polyolefin microporous membrane is formed into a thinner membrane.

In addition, conventional tests for evaluating the compressive resistance of a membrane are generally carried out by evaluating the variation in the membrane thickness obtained when the membrane is pressured for a short time (for example, treated at 2.2 MPa at 90°C for five minutes), and a smaller variation is rated as representing a higher compressive resistance (for example, the above-mentioned Patent Literature 5). In actual production of batteries, however, batteries are produced by compressing electrodes and separators through pressuring them for a long time, and accordingly, the conditions of conventional tests for evaluating the compressive resistance do not take into consideration creep characteristics or the like of microporous membranes, and are not sufficient as the evaluation conditions for compressive resistance needed for fabricating batteries. In addition, conventional tests for evaluating the compressive resistance of a membrane are such that a membrane is pressured, the membrane that has undergone elasticity restoration is measured, and the measurement value reflects the permanent strain of the membrane.

In view of this, the present inventors have completed the present invention using a test for the compressive resistance of a membrane to accurately analyze membranes suitably usable for batteries, wherein the test reflects an actual state in which a membrane is placed, for example, when pressured during production.

In view of the above-mentioned circumstances, an object of the present invention is to provide a polyolefin microporous membrane that has excellent compressive resistance even as a thinned membrane and achieves excellent self-discharge characteristics in cases where the polyolefin microporous membrane is used as a battery separator.

Solution to Problem

A polyolefin microporous membrane according to a first aspect of the present invention has a membrane thickness change rate of 0% or more and 15% or less with respect to 100% of the membrane thickness of the polyolefin microporous membrane that was not heated nor compressed, wherein the membrane thickness change rate is obtained when the polyolefin microporous membrane is compressed under heat at a temperature of 80°C at a pressure of 1 MPa for 60 minutes, and is calculated using the equation:

[(Average Thickness before Compressing - Average Thickness under Compression) / (Average Thickness before Compressing)] $\times$ 100;

 and has a tensile strength of 230 MPa or more in the MD direction thereof, measured in accordance with the method of ASTM D882.

In addition, the polyolefin microporous membrane may satisfy at least one of the conditions: a basis weight of less than 3.4 g/m$^2$ and a porosity of 40% or more. In addition, the polyolefin microporous membrane may have a tensile strength of 230 MPa or more in the MD direction. In addition, the polyolefin microporous membrane may have a tensile elongation of 100% or more in the TD direction.

A multilayer polyolefin microporous membrane according to a second aspect of the present invention has at least one layer of the polyolefin microporous membrane.

A coated polyolefin microporous membrane according to a third aspect of the present invention includes one or more coating layers on at least one surface of the polyolefin microporous membrane.

A battery according to a fourth aspect of the present invention includes a separator containing the polyolefin microporous membrane.

Advantageous Effects of Invention

The polyolefin microporous membrane according to the present invention has excellent compressive resistance and exhibits excellent self-discharge characteristics in cases where the polyolefin microporous membrane is used as a battery separator.

DESCRIPTION OF EMBODIMENTS

Below, embodiments of the present invention will be described. In this regard, the present invention is not to be limited to the embodiments described below.

1. Polyolefin Microporous Membrane

As used herein, a polyolefin microporous membrane refers to a microporous membrane containing a polyolefin as a main component, for example, a microporous membrane containing 90 mass% or more of polyolefin with respect to the total amount of the microporous membrane. Below, the properties of the polyolefin microporous membrane of the present embodiment will be described.

(Compressive Resistance)

Herein, compressive resistance in battery production steps is evaluated as a "membrane thickness change rate obtained when the membrane is compressed under heat at a temperature of 80°C at a pressure of 1 MPa for 60 minutes" (hereinafter, also referred to as a "membrane thickness change rate after compressing under heat"). For example, Patent Literature 5 describes a method of measuring a thickness change of a multilayer microporous membrane obtained after thermal compression, wherein the membrane is allowed to undergo thermal compression using a compressing machine at 90°C at a pressure of 2.2 MPa (22 kgf/cm$^2$) for five minutes, and then the average thickness is determined. However, the conventional measurement conditions do not reflect actual battery production conditions. In view of this, the present inventors have carried out compressive resistance evaluation under the above-mentioned conditions in order to meet conditions used in actual battery production steps.

The polyolefin microporous membrane of the present embodiment has a membrane thickness change rate of 0% or more and 15% or less, preferably 0% or more and 14% or less, with respect to 100% of the membrane thickness of the polyolefin microporous membrane that has not heated nor compressed, wherein the membrane thickness change rate is obtained when the polyolefin microporous membrane is compressed under heat at a temperature of 80°C at a pressure of 1 MPa for 60 minutes. A compressive resistance value of the polyolefin microporous membrane within these ranges enhances the self-discharge characteristics of a secondary battery in which this polyolefin microporous membrane is used as a separator. The reason for this is not limited to a particular one, but the present inventors infer that a compressive resistance value within these ranges allows the separator to have sufficient membrane strength, and accordingly suppresses the self-discharge.

The above-mentioned membrane thickness change rate (%) after compressing under heat refers to a value calculated, using the following equation (1), from an average per-membrane thickness which is measured when a laminate composed of at least ten polyolefin microporous membranes is under compression after the laminate is placed between a set of highly horizontal plates, and compressed under heat using a compressing machine (CYPT-20 Special, manufactured by Sintokogio, Ltd.) at 80°C at a pressure of 1 MPa for 60 minutes.

[(Average Thickness before Compressing - Average Thickness under Compression) / (Average Thickness before Compressing)] $\times$ 100;

Here, the above-mentioned membrane thickness change rate after compressing under heat is based on a membrane thickness measured under compression (in a compressed state) as above-mentioned, accordingly enables the membrane thickness to be measured before the membrane undergoes elasticity restoration, is free from variation in measured values due to the elasticity restoration of the membrane and the temperature history of the membrane, and represents a value that reflects the above-mentioned actual state in which the membrane is, for example, when the membrane is pressured during production.

The above-mentioned membrane thickness change rate after compressing under heat can be controlled within the above-mentioned ranges in production of the polyolefin microporous membrane, for example, by allowing the membrane to contain an ultrahigh molecular weight polyethylene and/or a nucleating agent and adjusting the weight average molecular weight Mw and the stretch ratio (particularly, the stretch ratio of the below-mentioned dried film).

(Tensile Strength)

The lower limit of the tensile strength (tensile breaking strength) of the polyolefin microporous membrane in the MD direction is 230 MPa or more, more preferably 250 MPa or more, still more preferably 280 MPa or more. The upper limit of the tensile strength in the MD direction is not limited to a particular value, and is, for example, 600 MPa or less. A tensile strength in the MD direction within these ranges allows the membrane to be broken less easily even under high tension and be used in applications where high durability is needed. For example, in cases where such a microporous membrane having excellent strength as above-mentioned is used as a separator, short circuit can be inhibited from occurring when the battery is fabricated or used, the separator can be rolled up under high tension, and an attempt can be made to increase the capacity of the battery. In addition, a thinned polyolefin microporous membrane needs a higher tensile strength in the MD direction in cases where a coating layer is formed on at least one surface of the thinned polyolefin microporous membrane. Accordingly, the polyolefin microporous membrane has a tensile strength in the MD direction of 230 MPa or more, more preferably 250 MPa or more, still more preferably, 280 MPa or more, in the light of enhancing the coating properties of the coating layer. A tensile strength in the MD direction within these ranges enables the membrane to be suitably used as a base material for coating.

The lower limit of the tensile strength of the polyolefin microporous membrane in the TD direction is not limited to a particular value, and is, for example, 100 MPa or more, preferably 150 MPa or more, more preferably 170 MPa or more. The upper limit of the tensile strength in the TD direction is not limited to a particular value, and is, for example, 300 MPa or less. In addition, the ratio of the MD tensile strength to the TD tensile strength (MD tensile strength/TD tensile strength) of the polyolefin microporous membrane is preferably more than 1.0, preferably more than 1.0 and 1.8 or less, more preferably 1.2 or more and 1.7 or less.

In cases where at least one of the TD tensile strength of the polyolefin microporous membrane and the ratio of the MD tensile strength to the TD tensile strength is within the above-mentioned ranges, the polyolefin microporous membrane has excellent tensile strength and accordingly can be suitably used in applications where high strength and durability are needed. In addition, the winding direction of the separator is usually the MD direction, and accordingly, the ratio of the MD tensile strength to the TD tensile strength is preferably within the above-mentioned ranges.

In this regard, the MD tensile strength and the TD tensile strength are values measured in accordance with the method based on ASTM D882.

(Tensile Elongation)

The tensile elongation (tensile breaking elongation) of the polyolefin microporous membrane in the MD direction is not limited to a particular value, and is, for example, 50% or more and 300% or less, preferably 50% or more and 100% or less. The breaking elongation in the MD direction within these ranges is preferable in that such a breaking elongation allows the polyolefin microporous membrane to be deformed less easily and generate wrinkles less easily even under high tension during coating, and accordingly, suppresses coating defects and affords a coating surface having good flatness.

The tensile elongation (tensile breaking elongation) of the polyolefin microporous membrane in the TD direction is not limited to a particular value, and is, for example, 50% or more and 300% or less, preferably 100% or more. A breaking elongation in the TD direction within these ranges is preferable in that the polyolefin microporous membrane has excellent crash resistance which can be evaluated in an impact test and the like, and that the polyolefin microporous membrane used as a separator enables the separator to conform to the concavo-convex surface of an electrode, the deformation of the battery, the internal stress caused by battery heat generation, and the like.

In this regard, the MD tensile elongation and the TD tensile elongation are values measured in accordance with the method based on ASTM D-882A.

(Piercing Strength)

The lower limit of the piercing strength of the polyolefin microporous membrane is preferably 1.96 N or more, more preferably 2.00 N or more. The upper limit of the piercing strength is not limited to a particular value, and is, for example, 7.00 N or less. A piercing strength within these ranges allows the polyolefin microporous membrane to have excellent membrane strength. In addition, a secondary battery in which this polyolefin microporous membrane is used as a separator suppresses the short-circuiting of the electrodes and self-discharge. The piercing strength can be controlled within the above-mentioned ranges in production of the polyolefin microporous membrane, for example, by allowing the membrane to contain an ultrahigh molecular weight polyethylene and/or a nucleating agent and/or adjusting the weight average molecular weight (Mw) and stretch ratio (particularly, the stretch ratio of the below-mentioned dried film) of the polyolefin resin contained in the polyolefin microporous membrane.

In addition, the polyolefin microporous membrane preferably has a piercing strength of 1.96 N or more, more preferably 2.00 N or more, still more preferably 2.50 N or more, as converted on the basis of a membrane thickness of 5 $\mu$m. The upper limit of the piercing strength as converted on the basis of a membrane thickness of 5 $\mu$m is not limited to a particular value, and is, for example, 4.00 N or less. A piercing strength within the above-described range allows the polyolefin microporous membrane to have excellent membrane strength even when formed into a thinner membrane, and a secondary battery in which this polyolefin microporous membrane is used as a separator suppresses the short-circuiting of the electrodes and self-discharge.

The piercing strength is a value obtained by measuring the maximum load (N) at which a polyolefin microporous membrane having a membrane thickness of $T_1$ ($\mu$m) is pierced at a speed of 2 mm/second by a needle which has a diameter of 1 mm and whose tip has a spherical surface (having a radius of curvature R of 0.5 mm). In addition, the piercing strength converted on the basis of a membrane thickness of 5 $\mu$m (N/5 $\mu$m) is a value that can be determined by the following equation.

Piercing Strength (Converted on the basis of 5 $\mu$m) = Measured Piercing Strength (N) $\times$ 5 ($\mu$m) / Membrane Thickness $T_1$ ($\mu$m)

(Air Permeability)

The air permeability (Gurley value) of the polyolefin microporous membrane is not limited to a particular value, and is, for example, 50 seconds/100 cm$^3$ or more and 300 seconds/100 cm$^3$ or less. In cases where the polyolefin microporous membrane is used as a separator for secondary batteries, the air permeability of the polyolefin microporous membrane is preferably 250 seconds/100 cm$^3$ or less, more preferably 200 seconds/100 cm$^3$ or less, still more preferably 150 seconds/100 cm$^3$ or less. In cases where the air permeability is within the above-described range and where the polyolefin microporous membrane is used as a separator for secondary batteries, the polyolefin microporous membrane has excellent ion permeability, allows the impedance of the secondary battery to decrease, and exhibits enhanced battery output. The air permeability can be controlled within the above-mentioned ranges by regulating the stretching conditions and the like used in producing the polyolefin microporous membrane.

In addition, the air permeability (Gurley value) of the polyolefin microporous membrane is preferably 150 seconds/100 cm$^3$/5 $\mu$m or less as converted on the basis of a membrane thickness of 5 $\mu$m.

(Membrane Thickness)

The upper limit of the membrane thickness of the polyolefin microporous membrane is not limited to a particular value, and is, for example, 30 $\mu$m or less, preferably 20 $\mu$m or less, more preferably 10 $\mu$m or less, still more preferably 7 $\mu$m or less . The lower limit of the membrane thickness is not limited to a particular value, and is, for example, 1 $\mu$m or more, preferably 3 $\mu$m or more. A membrane thickness within the above-described range enhances the battery capacity of a battery for which the polyolefin microporous membrane is used as a separator. The polyolefin microporous membrane of the present embodiment has high piercing strength and the like, and has high self-discharge characteristics and rate characteristics even in cases where the polyolefin microporous membrane is formed into a thinner membrane.

(Porosity)

The lower limit of the porosity of the polyolefin microporous membrane is not limited to a particular value, and is, for example, 10% or more, preferably 20% or more, more preferably 40% or more. The lower limit of the porosity is not limited to a particular value, and is, for example, 70% or less, preferably 60% or less, more preferably 50% or less. In cases where the polyolefin microporous membrane is used as a separator for secondary batteries, the porosity of the polyolefin microporous membrane is preferably 20% or more and 60% or less, more preferably 20% or more and 50% or less. A porosity within the above-described range can enhance the retention amount of an electrolyte solution and ensure high ion permeability. In addition, a porosity within the above-described range enhances the rate characteristics.

In addition, the porosity is preferably 40% or more in the light of enhancing the ion permeability and the rate characteristics. The porosity can be controlled within the above-described range in production processes by regulating the formulation ratios of the components of the polyolefin resin, the stretch ratio, the heat-fixation conditions, and the like.

(Basis Weight)

The upper limit of the basis weight of the polyolefin microporous membrane is, for example, 4.0 $g/m^2$ or less, preferably less than 3.4 $g/m^2$. The lower limit of the basis weight is not limited to a particular value, and is, for example, 1.0 $g/m^2$ or more, more preferably 1.5 $g/m^2$ or more. In cases where the polyolefin microporous membrane is used as a separator, a basis weight of the polyolefin microporous membrane within the above-described range can enhance the retention amount of an electrolyte solution per unit volume and ensure high permeability, and, in addition, the polyolefin microporous membrane has excellent self-discharge characteristics even when the polyolefin microporous membrane has a smaller membrane thickness. The basis weight of the polyolefin microporous membrane can be controlled within the above-described range in production processes by regulating the formulation ratios of the components of the polyolefin resin, the stretch ratio, and the like. In this regard, the basis weight of the polyolefin microporous membrane is the weight of 1 $m^2$ of the polyolefin microporous membrane.

(Porosity and Basis Weight)

The polyolefin microporous membrane preferably satisfies at least one of the conditions: a basis weight of less than 3.4 $g/m^2$ and a porosity of 40% or more. In cases where the polyolefin microporous membrane is used as a separator, a basis weight or porosity of the polyolefin microporous membrane within the above-described range can increase the retention amount of an electrolyte solution per unit volume and enhance the battery characteristics. In cases where the polyolefin microporous membrane satisfies the above-mentioned condition and where the polyolefin microporous membrane is thinned so as to have a smaller membrane thickness and used as a battery separator, the polyolefin microporous membrane has superior self-discharge characteristics, rate characteristics, and cycle characteristics.

(Thermal Shrinkage Ratio)

The thermal shrinkage ratio in the MD direction of the polyolefin microporous membrane treated at 105°C for eight hours is, for example, 10% or less, preferably 6% or less, more preferably 4% or less. The thermal shrinkage ratio in the TD direction of the polyolefin microporous membrane treated at 105°C is, for example, 10% or less, preferably 8% or less, more preferably 6% or less. The lower limit of the thermal shrinkage ratio in the MD direction and the lower limit of the thermal shrinkage ratio in the TD direction are not limited to particular values, and are preferably, for example, 0.5% or more. In cases where the thermal shrinkage ratio in the MD direction and the thermal shrinkage ratio in the TD direction are within the above-described range, the polyolefin microporous membrane has excellent heat-resistant shrink properties, and, for example, in cases where the polyolefin microporous membrane is used as a separator, the polyolefin microporous membrane enables thermally-induced expansion and shrinkage to be suppressed.

(Composition)

The polyolefin microporous membrane contains a polyolefin resin as a main component. Examples of polyolefin resins that can be used include polyethylene, polypropylene, and the like. For example, the polyolefin microporous membrane can contain 50 mass% or more of polyethylene with respect to the total amount of the polyolefin microporous membrane. As the polyethylene, various polyethylenes can be used without particular limitation, and examples of usable polyethylenes include high density polyethylenes, intermediate density polyethylenes, branched low density polyethylenes, linear low density polyethylenes, and the like. In this regard, the polyethylene may be a homopolymer of ethylene or a copolymer of ethylene and another $\alpha$-olefin. Examples of $\alpha$-olefins include propylene, butene-1, hexene-1, pentene-1, 4-methylpentene-1, octene, vinyl acetate, methyl methacrylate, styrene, and the like.

In cases where the polyolefin microporous membrane contains a high density polyethylene (having a density of 0.920 $g/m^3$ or more and 0.970 $g/m^3$ or less), the polyolefin microporous membrane has excellent melt-extrusion characteristics and excellent uniform stretching processing characteristics. The weight average molecular weight (Mw) of a high density polyethylene used as a raw material is, for example, approximately $1 \times 10^4$ or more and less than $1 \times 10^6$. In this regard, Mw is a value measured by gel permeation chromatography (GPC). The high density polyethylene content is, for example, 50 mass% or more with respect to 100 mass% of the whole polyolefin resin. The upper limit of the high density polyethylene content is, for example, 100 mass% or less, and is, for example 90 mass% or less in cases where the polyolefin microporous membrane contains another component.

In addition, the polyolefin microporous membrane can contain an ultrahigh molecular weight polyethylene (UHMwPE). The weight average molecular weight (Mw) of an ultrahigh molecular weight polyethylene used as a raw material is $1 \times 10^6$ or more (100,000 or more), preferably $1 \times 10^6$ or more and $8 \times 10^6$ or less. An Mw value within the above-described range affords good moldability. In this regard, Mw is a value measured by gel permeation chromatography (GPC). The ultrahigh molecular weight polyethylene can be used singly or in combination of two or more kinds thereof, and, for example, two or more ultrahigh molecular weight polyethylenes having different Mw values may be used in mixture.

The ultrahigh molecular weight polyethylene can be contained, for example, in an amount of 0 mass% or more and 70 mass% or less with respect to 100 mass% of the whole polyolefin resin. For example, an ultrahigh molecular weight polyethylene content of 10 mass% or more and 60 mass% or less tends to allow the obtained polyolefin microporous membrane to have an Mw value that is easily controlled within the below-mentioned specific range, and have excellent productivity such as extrusion-kneading properties. Furthermore, in cases where the polyolefin microporous membrane contains an ultrahigh molecular weight polyethylene and is formed into a thinner membrane, the polyolefin microporous membrane can obtain high mechanical strength.

The polyolefin microporous membrane may contain polypropylene. The kind of polypropylene is not limited to a particular one, and may be any one of propylene homopolymers, copolymers of propylene and another $\alpha$-olefin and/or diolefin (propylene copolymer), and mixtures thereof. Propylene homopolymers are preferably used in the light of mechanical strength, minuter through-hole diameter, and the like. The polypropylene content of the whole polyolefin resin is, for example, 0 mass% or more and 15 mass% or less, preferably 2.5 mass% or more and 15 mass% or less, in the light of heat-resistance.

In addition, the polyolefin microporous membrane can contain a resin component other than polyethylene and polypropylene, if necessary. Examples of other resin components that can be used include heat-resistant resins and the like. In addition, the polyolefin microporous membrane may contain any kind of additive such as an antioxidant, heat stabilizer, antistatic agent, ultraviolet absorber, antiblocking agent, filler, crystal nucleating agent, or crystallization retarding agent, to the extent that the effects of the present invention are not impaired.

2. Method of Producing Polyolefin Microporous Membrane

A method of producing the polyolefin microporous membrane is not limited to a particular one as long as the method makes it possible to obtain the polyolefin microporous membrane having the above-mentioned characteristics, and a known method of producing polyolefin microporous membranes can be used. Examples of methods of producing polyolefin microporous membranes include a dry type membrane-forming method and a wet type membrane-forming method. A preferable method of producing the polyolefin microporous membrane of the present embodiment is a wet type membrane-forming method in the light of easiness of control of the structure and properties of the membrane. Examples of wet type membrane-forming methods that can be used include methods described in JP2132327B2, JP3347835B2, WO2006/137540, and the like.

Below, a method of producing a polyolefin microporous membrane (a wet type membrane-forming method) will be described. In this regard, the following description is an example of the producing method, and this method is not limitative.

First, a polyolefin resin and a solvent for membrane-forming (solvent) are melt-kneaded to prepare a resin solution. Examples of melt-kneading methods that can be used include methods carried out using a twin-screw extruder which are described in JP2132327B2 and JP3347835B2. Melt-kneading methods are known, and accordingly, the description is omitted.

The polyolefin resin preferably contains a high density polyethylene. The polyolefin resin containing a high density polyethylene has excellent melt-extrusion characteristics and excellent uniform stretching processing characteristics. In addition, the polyolefin resin can contain an ultrahigh molecular weight polyethylene. In cases where the polyolefin resin contains an ultrahigh molecular weight polyethylene, the obtained polyolefin microporous membrane tends to have an Mw value that is easily controlled within the below-mentioned specific range, and have excellent productivity such as extrusion-kneading properties. The details of the kinds and formulation amounts of polyolefin resins that can be used are the same as above-mentioned, and are omitted here.

In this regard, the resin solution may contain a component other than the above-mentioned polyolefin resin and solvent for membrane-forming (solvent), and may contain, for example, a crystal nucleating agent (nucleating agent), an antioxidant, or the like. The nucleating agent is not limited to a particular one, and known compound-based and microparticle-based crystal nucleating agents and the like can be used. The nucleating agent may be formed into a masterbatch by preliminarily mixing and dispersing the nucleating agent into a polyolefin resin.

In this regard, in cases where the resin solution contains no crystal nucleating agent, the polyolefin resin preferably contains the above-mentioned ultrahigh molecular weight polyethylene and high density polyethylene. In addition, the polyolefin microporous membrane may contain a high density polyethylene, an ultrahigh molecular weight polyethylene, and a nucleating agent. The polyolefin microporous membrane containing these can achieve enhanced piercing strength.

Then, the molten resin is extruded and cooled to form a gelatinous sheet. For example, the resin solution adjusted above is fed from an extruder into one die and extruded in sheet form to obtain a formed object. The obtained formed object is cooled to form a gelatinous sheet.

Examples of methods that can be used for forming gelatinous sheets include methods disclosed in JP2132327B2 and JP3347835B2. The cooling is preferably carried out at a speed of 50°C/min or more at least until a gelation temperature is reached. The cooling is preferably carried out to 25°C or less. The cooling makes it possible to immobilize the microphase of the polyolefin separated with a solvent for membrane-forming. A cooling speed within the above-mentioned range allows the crystallinity to be kept within a suitable range and affords a gelatinous sheet suitable for stretching. Examples of cooling methods that can be used include a method based on contact with a coolant such as cold air or cooling water, a method based on contact with a cooling roll, and the like, and cooling based on contact with a roll cooled with a coolant is preferable.

Then, the gelatinous sheet is stretched. Stretching a gelatinous sheet (first stretching) is also referred to as wet stretching. Wet type stretching is carried out at least in the uniaxial direction. The gelatinous sheet contains a solvent, and accordingly, can be stretched uniformly. After the gelatinous sheet is heated, the gelatinous sheet is preferably stretched at a predetermined ratio using a tenter method, roll method, inflation method, or a combination thereof. The stretching may be uniaxial stretching or biaxial stretching, and biaxial stretching is preferable. The biaxial stretching may be any one of simultaneous biaxial stretching, sequential stretching, and multistage stretching (for example, a combination of simultaneous biaxial stretching and sequential stretching).

In wet stretching, the final area stretch ratio (area magnification ratio) is, for example, preferably three times or more, more preferably four times or more and 30 times or less, for uniaxial stretching. For biaxial stretching, the final area stretch ratio is preferably nine times or more, more preferably 16 times or more, still more preferably 25 times or more. The upper limit is preferably 100 times or less, more preferably 64 times or less. In addition, the final area stretch ratio is preferably three times or more both in the longitudinal direction (the machine direction: MD direction) and in the cross direction (the width direction: TD direction), and the stretch ratio in the MD direction and that in the TD direction may be the same or different. In cases where the stretch ratio is five times or more, the piercing strength can be promisingly expected to be enhanced. In this regard, the stretch ratio in the present step refers to the stretch ratio of the gelatinous sheet existing immediately before the gelatinous sheet is supplied for the step subsequent to the present step, with respect to the gelatinous sheet existing immediately before the present step. In addition, the TD direction is the direction perpendicular to the MD direction of the microporous membrane that is viewed as a plane.

The stretching temperature is preferably in a range of from the crystalline dispersion temperature (Ted) of a polyolefin resin to Tcd + 30°C, more preferably in a range of from the crystalline dispersion temperature (Ted) +5°C to the crystalline dispersion temperature (Ted) + 28°C, particularly preferably in a range of from Ted + 10°C to Tcd + 26°C. A stretching temperature within the above-mentioned ranges makes it possible to suppress membrane breakage due to stretching the polyolefin resin and to carry out stretching at a high ratio. As used herein, the crystalline dispersion temperature (Ted) refers to a value determined by measuring the temperature characteristics of dynamic viscoelasticity in accordance with ASTM D4065. The above-mentioned ultrahigh molecular weight polyethylene, the polyethylene other than the ultrahigh molecular weight polyethylene, and the polyethylene composition have a crystalline dispersion temperature of from approximately 90 to 100°C. The stretching temperature can be, for example, 90°C or more and 130°C or less.

Such stretching as above-mentioned causes cleavage between the lamellas of polyethylene, makes the polyethylene phase minuter, and forms a large number of fibrils. The fibrils form a three-dimensionally irregularly linked network structure. Stretching enhances the mechanical strength and expand the pores, but stretching carried out under suitable conditions makes it possible to control the through-hole diameter and, in addition, afford a high porosity even with a smaller membrane thickness. Owing to this, such a polyolefin microporous membrane is suitable for a safer and higher-performance battery separator.

Then, the solvent for membrane-forming is removed from the above-mentioned stretched gelatinous sheet to yield a microporous membrane (film). The removal of the solvent for membrane-forming is carried out by washing using a washing solvent. The polyolefin phase is phase-separated from the phase of the solvent for membrane-forming, and accordingly, the removal of the solvent for membrane-forming affords a porous membrane that is composed of fibrils having a minute three-dimensional network structure and has three-dimensionally irregularly communicating pores (voids). Washing solvent and methods of removing the solvent for membrane-forming using a washing solvent are known, and accordingly, the description of the washing solvents and the methods is omitted. Examples of the methods that can be used include methods disclosed in JP2132327B2 and JP2002-256099.

Then, the microporous membrane from which the solvent for membrane-forming has been removed is dried by a heat-drying method or an air-drying method. The drying temperature is preferably equal to or lower than the crystalline dispersion temperature (Ted) of a polyolefin resin, particularly preferably 5°C or more lower than Ted. The drying is preferably carried out until the remaining washing solvent is reduced to 5 mass% or less with respect to the microporous membrane film as 100 mass% (dry weight), more preferably carried out until 3 mass% or less. The remaining washing solvent within the above-mentioned ranges allows the porosity of the polyolefin microporous membrane to be retained in carrying out the steps of stretching and heat-treatment of the microporous membrane film in the subsequent stages and allows the permeability to be inhibited from deteriorating.

Then, the dried microporous membrane is stretched. Stretching the dried microporous membrane (a second stretching and a third stretching) is also referred to as dry stretching. The dried microporous membrane film is dry-stretched at least in the uniaxial direction. The microporous membrane film can be dry-stretched under heat by a tenter method and the like in the same manner as above-mentioned. The stretching may be uniaxial stretching or biaxial stretching. The biaxial stretching may be any one of simultaneous biaxial stretching and sequential stretching, and is preferably sequential stretching. For sequential stretching, it is preferable that the microporous membrane is stretched in the MD direction (the second stretching), and sequentially stretched in the TD direction (the third stretching).

The area magnification ratio (the area stretch ratio) in the dry stretching is preferably 1.2 times or more, more preferably 1.2 times or more and 9.0 times or less. An area magnification ratio within the above-mentioned range makes it possible to easily control the piercing strength and the like within a desired range. For uniaxial stretching, the area magnification ratio is, for example, 1.2 times or more, preferably 1.2 times or more and 3.0 times or less, in the MD direction or in the TD direction. For biaxial stretching, the stretch ratio may be 1.0 times or more and 3.0 times or less in each of the MD direction and the TD direction, the stretch ratio in the MD direction and that in the TD direction may be the same or different, and preferably, the stretch ratio in the MD direction and that in the TD direction are substantially the same. For dry stretching, it is preferable that the microporous membrane is stretched (the second stretching) more than 1-fold and 3-fold or less in the MD direction, and sequentially stretched (the third stretching) more than 1-fold and 3-fold or less in the TD direction. In this regard, the stretch ratio in the present step refers to the stretch ratio of the microporous membrane existing immediately before the microporous membrane is supplied for the step subsequent to the present step, with respect to the microporous membrane (film) existing immediately before the present step. The stretching temperature in the present step (dry stretching) is not limited to a particular value, and is usually from 90 to 135°C.

The second stretching based on roll stretching is preferably multistage stretching. In stretching at a high ratio, slippage caused on rolls makes the stretching points inconstant and is more likely to cause stretching nonuniformity. Increasing the number of stretching stages can decrease stretch nonuniformity. In particular, at a stretch ratio of 1.5 or more, stretching in four stages or more is preferable, and stretching in five stages or more is more preferable.

In addition, the dried microporous membrane may be heat-treated. The heat-treatment stabilizes the crystal and uniformizes the lamellas. Examples of heat-treatment methods that can be used include heat-fixation treatment and/or thermal relaxation treatment. The heat-fixation treatment is heat-treatment by which the membrane is heated with the dimension in the TD direction retained so as to be unchanged. The thermal relaxation treatment is heat-treatment by which the membrane is heated and thermally shrunk in the MD direction and the TD direction during the heating. The heat-fixation treatment is preferably carried out using a tenter method or a roll method. Examples of thermal relaxation treatment methods include a method disclosed in JP2002-256099A. The heat-treatment temperature is preferably in a range of from Tcd to Tm of the second polyolefin resin, more preferably in a range of the stretching temperature of the microporous membrane ± 5°C, particularly preferably in a range of the second stretching temperature of the microporous membrane ± 3°C.

The heat-treatment and the thermal relaxation treatment may be carried out, for example, after the third stretching. In the thermal relaxation treatment, the relaxation temperature is, for example, 80°C or more and 135°C or less, preferably 90°C or more and 133°C or less. In cases where the thermal relaxation treatment is carried out, the final dry stretch ratio is, for example, 1.0 times or more and 9.0 times or less, preferably 1.2 times or more and 4.0 times or less. The relaxation ratio can be 0% or more and 70% or less.

In addition, cross-linking treatment and hydrophilization treatment can further be carried out on the dry-stretched polyolefin microporous membrane. For example, the cross-linking treatment is carried out by irradiating the microporous membrane with an ionizing radiation such as α-rays, β-rays, γ-rays, or electron rays. For the irradiation with electron rays, an electron dose of from 0.1 to 100 Mrad is preferable, and an acceleration voltage of from 100 to 300 kV is preferable. The cross-linking treatment raises the meltdown temperature of the microporous membrane. In addition, the hydrophilization treatment can be carried out by monomer grafting, surfactant treatment, corona discharge, and the like. The monomer grafting is preferably carried out after the cross-linking treatment.

In this regard, the polyolefin microporous membrane may be a monolayer or may be formed into a laminate including one or more layers composed of the polyolefin microporous membrane. The multilayer polyolefin microporous membrane can have two or more layers composed of the polyolefin microporous membrane. In the multilayer polyolefin microporous membrane, the composition of the polyolefin resin contained in one layer may be the same as or different from the composition of the polyolefin resin contained in another layer.

In this regard, the polyolefin microporous membrane may be a laminate polyolefin porous membrane in which a porous layer other than a polyolefin resin is laminated. Examples of other porous layers include, without particular limitation, porous layers in which a coat layer such as an inorganic particle layer containing a binder and an inorganic particle may be laminated. The binder component contained in the inorganic particle layer is not limited to a particular one, and a known component can be used as the binder component. Examples of binder components that can be used include acrylic resins, polyvinylidene fluoride resins, polyamideimide resins, polyamide resins, aromatic polyamide resins, polyimide resins, and the like. The inorganic particle contained in the inorganic particle layer is not limited to a particular one, and a known material can be used as the inorganic particle. Examples of inorganic particles that can be used include alumina, boehmite, barium sulfate, magnesium oxide, magnesium hydroxide, magnesium carbonate, silicon, and the like. In addition, the laminate polyolefin porous membrane may be a laminate in which the binder resin made porous is laminated on at least one surface of the polyolefin microporous membrane.

EXAMPLES

Below, the present invention will be described more specifically with reference to Examples. However, the present invention is not to be limited to these Examples.

1. Measurement Method and Evaluation Method

[Membrane Thickness]

Five points in a 95 mm × 95 mm area in the microporous membrane were measured for membrane thickness using a contact type thickness gauge (Litematic, manufactured by Mitutoyo Corporation), and the average value was determined from the measurements.

[Porosity]

The porosity was measured in accordance with the following equation on the basis of the weight $w_1$ of the microporous membrane compared with the weight $w_2$ of a polymer (a polymer having the same width, length, and composition) equivalent to the microporous membrane but having no pore.

$$\text{Porosity (\%)} = (w_2 - w_1) / w_2 \times 100$$

[Basis Weight]

The basis weight was measured on the basis of the weight of a 1 m$^2$ area of the microporous membrane.

[Tensile Strength]

The MD tensile strength and the TD tensile strength were measured using 10 mm wide strip test pieces in accordance with the method based on ASTM D882.

[Tensile Elongation]

The MD tensile strength and the TD tensile strength were measured in accordance with the method based on ASTM D-882A.

[Piercing Strength]

The piercing strength was determined by measuring the maximum load $L_i$ (N) at which a microporous membrane having a membrane thickness of $T_1$ (μm) was pierced at a speed of 2 mm/second by a needle which had a diameter of 1 mm and whose tip has a spherical surface (having a radius of curvature R of 0.5 mm).

[Air Permeability (Air Permeation Resistance, Gurley value)]

The microporous membrane having a membrane thickness of $T_1$ (μm) was measured for the air permeation resistance $P_1$ (sec/100 cm$^3$) using an air permeability tester (EGO-1T, manufactured by ASAHI SEIKO CO., LTD.) in accordance with JIS P-8117. In addition, the air permeation resistance $P_2$ based on a membrane thickness of 5 μm (converted on the basis of 5 μm) (sec/100 cm$^3$/5 μm) was calculated using the equation $P_2 = (P_1 \times 5) / T_1$.

[Thermal Shrinkage Ratio]

The MD thermal shrinkage ratio and TD thermal shrinkage ratio based on 105°C for eight hours were measured.

(1) The size of a test piece of the polyolefin microporous membrane at room temperature (25°C) was measured both in MD and TD.
(2) The test piece of the polyolefin microporous membrane was equilibrated under no load at a temperature of 105°C for eight hours.
(3) The size of the polyolefin microporous membrane was measured both in MD and TD.
(4) The thermal shrinkage in each of the MD direction and TD direction was calculated by dividing the measurement result (3) by the measurement result (1), subtracting the obtained value from 1, and expressing the resulting value in percent (%).

[Compressive Resistance]

The compressive resistance was evaluated on the basis of a membrane thickness change rate of the polyolefin microporous membrane that was compressed under heat at a pressure of 1 MPa at a temperature of 80°C for 60 minutes.
A laminate composed of ten polyolefin microporous membranes was placed between a set of highly horizontal plates, and compressed under heat using a compressing machine (CYPT-20 Special, manufactured by Sintokogio, Ltd.) at a pressure of 1 MPa at 80°C for 60 minutes, the membrane thicknesses under compression were measured, and the average per-membrane thickness (the average thickness under compression) was calculated. The membrane thickness change rate of the polyolefin microporous membrane that was compressed under heat was calculated using the following equation:

[(Average Thickness before Compressing - Average Thickness under Compression) / (Average Thickness before Compressing)] $\times$ 100

[Transmittance]

The polyolefin microporous membrane was measured for transmitted beam volume at points sampled at 6.7 cm intervals for 20 m in the MD direction, the average transmittance (Ave) and the standard deviation ($\sigma$) thereof were determined, and coefficient of variation ($\sigma$/Ave) was treated as a flatness index. The smaller the $\sigma$/Ave value is, the smaller the stretching nonuniformity is, and the better the flatness is. The transmitted beam volume was measured in the following manner. Using a transmitted beam volume meter (IB-30, manufactured by Keyence Corporation), the transmitted beam volume of the polyolefin microporous membrane was measured at the center (150 mm) of the transmitter/receiver distance of 300 mm. The transmitted beam volume was measured at points sampled at 6.7 cm intervals for 20 m, and the average transmittance (Ave) and the standard deviation ($\sigma$) were calculated.

$$\text{Coefficient of Variation of Transmittance} = \text{Standard Deviation } \sigma / \text{Average Value Ave}$$

Flatness (Stretch Nonuniformity) Evaluation

$\times$: The coefficient of variation of transmittance is 0.03 or more.
$\circ$: The coefficient of variation of transmittance is less than 0.03.

The weight average molecular weight (Mw) of the polyolefin resin was determined by gel permeation chromatography (GPC) under the following conditions.

- Measuring device: GPC-150C, manufactured by Waters Corporation
- Column: Shodex UT806M, manufactured by Showa Denko K.K.
- Column temperature: 135°C
- Solvent (mobile phase): o-dichlorobenzene
- Solvent flowrate: 1.0 ml/min

**EP 3 594 278 B1**

- Sample concentration: 0.1 wt% (dissolution condition: 135°C/1h)
- Injection amount: 500 μl
- Detector: Differential refractometer (RI detector), manufactured by Waters Corporation
- Calibration curve: prepared using a predetermined conversion constant (0.468) on the basis of the calibration curve obtained using a monodisperse polystyrene standard sample

[Self-discharge Characteristics]

The self-discharge characteristics were evaluated by the following method. After a secondary battery for testing assembled in accordance with the below-mentioned (Method of Fabricating Battery for Evaluation) was charged at a constant current of 0.5 C until the battery voltage reached 3.85 V, the secondary battery was charged at a constant battery voltage of 3.85 V until the current reached 0.05 C. After the battery was left to stand for 24 hours, the open circuit voltage was metered, and this value was regarded as V1. After the battery was left to stand for another 24 hours, that is, left to stand for 48 hours in total, after the battery was charged, the open circuit voltage was metered, and this value was regarded as V2. From the obtained values V1 and V2, a K value was calculated using the following equation.

$$\text{Equation: K Value (mV/h)} = (V1 - V2) / 24$$

×: The K value is 0.03 or more.
∘: The K value is 0.02 or more and less than 0.03.
•: The K value is less than 0.02.

[Rate Characteristics]

The rate characteristics were evaluated by the following method. The rate characteristics were measured using a secondary battery for testing fabricated in accordance with the below-mentioned (Method of Fabricating Battery for Evaluation). After the secondary battery for testing was charged at a constant current of 1.0 C until the battery voltage reached 4.2 V, the secondary battery was charged at a constant battery voltage of 4.2 V until the current reached 0.05 C. Then, the secondary battery was discharged at a current value of 0.2 C (discharged at a constant current) until the battery voltage reached 3.0 V, and the discharge capacity was measured. Subsequently, the secondary battery was charged again using the above-mentioned procedures until the battery voltage reached 4.2 V. Then, the secondary battery was discharged at a current value of 5 C (discharged at a constant current) until the battery voltage reached 3.0 V, and the discharge capacity was measured. The discharge capacity ratio was calculated using the following equation.

Discharge Capacity Ratio = Discharge Capacity at 5 C $\times$ 100 / Discharge Capacity at 0.2 C

×: The discharge capacity ratio value is less than 85%.
∘: The discharge capacity ratio value is 85% or more and less than 90%.
•: The discharge capacity ratio value is 90% or more and less than 100%.

[Cycle Characteristics]

The cycle characteristics were evaluated by the following method. The cycle characteristics were measured using a secondary battery for testing fabricated in accordance with the above-mentioned (Method of Fabricating Battery). After the secondary battery was charged at a constant current of 1.0 C until the battery voltage reached 4.2 V, the secondary battery was charged at a constant battery voltage of 4.2 V until the current reached 0.05 C. After a ten-minute break, the secondary battery was discharged at a constant current value of 1.0 C until the battery voltage reached 3.0V, and then a ten-minute break was taken. This charge and discharge operation was counted as one cycle, and the charge and discharge cycle was repeated 500 times.
The remaining capacity ratio was calculated using the following equation.

Remaining Capacity Ratio = Discharge Capacity after 500th Cycle $\times$ 100 / Discharge Capacity after 1st Cycle

×: The remaining capacity ratio value is 80% or less.

∘: The remaining capacity ratio value is more than 80% and 100% or less.

(Method of Fabricating Battery for Evaluation)

The battery used for evaluation (battery for evaluation) was fabricated as follows: a lithium-cobalt composite oxide $LiCoO_2$ was used as a cathode active material; graphite was used as an anode active material; 1 mol/L $LiPF_6$ prepared in a solvent mixture of EC/EMC/DMC was used as an electrolyte solution; the cathode, a separator composed of the polyolefin microporous membrane, and the anode were laminated; the laminate was fabricated into a rolled electrode using a conventional method; the rolled electrode was inserted in a battery can and impregnated with the electrolyte solution; and the can was sealed. Below, the details of the method of fabricating a battery for evaluation will be described.

(Fabrication of Cathode)

A lithium-cobalt composite oxide $LiCoO_2$ as a cathode active material, acetylene black as an electrical conducting material, and polyvinylidene fluoride (PVDF) as a binder were mixed at a mass ratio of 93.5:4.0:2.5, and the resulting mixture was mixed and dispersed in N-methylpyrrolidone (NMP) as a solvent to prepare slurry. This slurry was applied to both sides of a 12 $\mu$m thick aluminium foil, and the resulting cathode collector was dried and then rolled using a roll press machine. The rolled cathode collector was slit to form a cathode having a width of 30 mm.

(Fabrication of Anode)

Artificial graphite as an anode active material, carboxymethylcellulose as a binder, and styrene-butadiene copolymer latex were mixed and dispersed at a mass ratio of 98:1:1 in purified water to prepare slurry. This slurry was applied to both sides of a 10 $\mu$m thick copper foil, and the resulting anode collector was dried and then rolled using a roll press machine. The rolled anode collector was slit to form an anode having a width of 33 mm.

(Non-Aqueous Electrolyte Solution)

In a solvent mixture of ethylenecarbonate, ethylmethylcarbonate, and dimethylcarbonate mixed at 3:5:2 (volume ratio), $LiPF_6$ as a solute was dissolved at a concentration of 1.15 mol/liter. Further, 0.5 mass% of vinylene carbonate was added to the resulting mixture with respect to 100 mass% of a non-aqueous electrolyte solution that is thus prepared.

(Fabrication of Battery)

The above-mentioned cathode, the polyolefin microporous membrane, and the above-mentioned anode were laminated, and then, a flat rolled electrode (2.2 mm in height $\times$ 36 mm in width $\times$ 29 mm in depth) was fabricated. A tab with a sealant was welded to each electrode of the flat rolled electrode to form a cathode lead and an anode lead. The flat rolled electrode portion was sandwiched with an aluminium laminate film, which was sealed with an opening left therein, and the resulting assembly was dried in a vacuum oven at 80°C for six hours. Immediately after the drying, 0.7 mL of electrolyte solution was added to the electrode, and the assembly was sealed using a vacuum sealer, and press-molded at 80°C at 1 MPa for one hour. Subsequently, the assembly was charged and discharged. The assembly was charged at a constant current of 300 mA until the battery voltage reached 4.2 V, and then, the assembly was charged at a constant battery voltage of 4.2 V until the current reached 15 mA. After a ten-minute break, the assembly was discharged at a constant current of 300 mA until the battery voltage reached 3.0V, and then a ten-minute break was taken. This charge and discharge cycle was carried out three times to prepare a secondary battery for testing that has a battery capacity of 300 mAh.

(Examples 1 to 12; Examples 7, 9 and 10 do not illustrate the invention)

On the basis of the compositions shown in Tables 1 and 2, a polyolefin resin and a liquid paraffin were melt-kneaded using a twin-screw extruder to prepare a polyolefin solution. The polyolefin solution was fed from a twin-screw extruder to a T-die and extruded. The extruded formed product was both cooled and withdrawn using a cooling roll to form a gelatinous sheet. The gelatinous sheet was allowed to undergo five-fold simultaneous biaxial stretching or sequential biaxial stretching both in the MD direction and TD direction using a tenter stretching machine at 106°C or more and 112°C or less (the first stretching). The stretched gelatinous sheet was immersed in a methylene chloride bath, liquid paraffin was removed from the sheet, and the resulting sheet was dried to obtain a dried membrane. The dried membrane was stretched 1.40-fold or more and 1.90-fold or less by a roll stretch method using a batch type stretching machine in the MD direction at 90°C or more and 113°C or less (the second stretching). Then, the dried membrane was stretched 1.34-fold or more and 2.11-fold or less in the TD direction at 128.0°C or more and 133.0°C or less (the third stretching). Next, the obtained membrane was relaxed by a tenter method at a relaxation ratio of 2% or more and 10% or less in a range of 129.0°C or more and 133.1°C or less. Here, the stretch ratio in the TD direction was 1.32 times or more and 2.03 times or less after the relaxation. The production conditions, evaluation results, and the like of the obtained polyolefin microporous membrane are shown in Tables 1 and 2.

(Comparative Examples 1 to 5)

On the basis of the compositions shown in Table 3, a polyolefin resin and a liquid paraffin were melt-kneaded using a twin-screw extruder to produce a polyolefin microporous membrane under the production conditions shown in Table 3. The evaluation results and the like of the obtained polyolefin microporous membrane are shown in Table 3.

[Table 1]

| | | | Example 1 | Example 2 | Example 3 | Example 4 | Example 5 | Example 6 |
|---|---|---|---|---|---|---|---|---|
| Composition | UHMWPE | Molecular Weight | $2.0 \times 10^6$ | $2.0 \times 10^6$ | $2.0 \times 10^6$ | $2.0 \times 10^6$ | $2.0 \times 10^6$ | $2.0 \times 10^6$ |
| | | Content (wt%) | 40 | 40 | 40 | 40 | 40 | 40 |
| | HDPE | Molecular Weight | $3.0 \times 10^5$ | $3.0 \times 10^5$ | $3.0 \times 10^5$ | $3.0 \times 10^5$ | $3.0 \times 10^5$ | $3.0 \times 10^5$ |
| | | Content (wt%) | 60 | 60 | 60 | 60 | 60 | 60 |
| | Resin Concentration of Melt-kneaded Product (wt%) | | 25 | 25 | 25 | 25 | 25 | 25 |
| Production Conditions | First Stretching | Temperature (°C) | 110 | 110 | 110 | 110 | 110 | 110 |
| | | Area Magnification Ratio | 25 | 25 | 25 | 25 | 25 | 25 |
| | Second Stretching | Temperature (°C) | 113 | 113 | 113 | 113 | 113 | 113 |
| | | Stretch Ratio (MD) | 1.40 | 1.55 | 1.55 | 1.55 | 1.65 | 1.80 |
| | | Number of Stretching Stages | 5 | 5 | 5 | 5 | 5 | 5 |
| | Third Stretching | Temperature (°C) | 132.5 | 132.0 | 130.5 | 132.6 | 131.6 | 132.8 |
| | | Stretch Ratio (TD) | 1.63 | 1.80 | 2.05 | 2.05 | 2.05 | 2.11 |
| | Relaxation toe-in Temperature (°C) after Third Stretching | | 133.1 | 132.5 | 131.0 | 131.6 | 132.6 | 132.8 |
| | Relaxation Ratio/Stretch Ratio (TD) | | 8%/1.50 | 8%/1.65 | 4%11.98 | 4%/1.98 | 4%11.98 | 4%/2.03 |

(continued)

|  |  |  | Example 1 | Example 2 | Example 3 | Example 4 | Example 5 | Example 6 |
|---|---|---|---|---|---|---|---|---|
| Properties | Membrane Thickness ($\mu$m) |  | 5.4 | 5.3 | 5.2 | 4.1 | 4.2 | 3.2 |
|  | Air Permeability (sec/100cm$^3$) |  | 97 | 102 | 57 | 109 | 62 | 74 |
|  | Porosity (%) |  | 40 | 40 | 46 | 35 | 42 | 32 |
|  | Basis Weight (g/m2) |  | 3.2 | 3.2 | 2.8 | 2.6 | 2.5 | 2.2 |
|  | Piercing Strength (mN) |  | 2656 | 2891 | 2690 | 2590 | 2440 | 2220 |
|  | Tensile Breaking Strength (Mpa) | MD | 294 | 322 | 287 | 347 | 328 | 380 |
|  |  | TD | 193 | 208 | 226 | 270 | 236 | 251 |
|  |  | MD/TD | 1.52 | 1.55 | 1.27 | 1.29 | 1.39 | 1.51 |
|  | Tensile Breaking Elongation (%) | MD | 72 | 70 | 86 | 90 | 75 | 64 |
|  |  | TD | 127 | 126 | 116 | 123 | 118 | 119 |
|  | Thermal Shrinkage (%) | MD | 2.9 | 2.9 | 3.7 | 3.1 | 3.4 | 2.6 |
|  |  | TD | 4.0 | 3.8 | 5.3 | 3.3 | 5.2 | 4.9 |
|  | Compressive Resistance (1 MPa, 80°C, 1 hr) (%) |  | 3.7 | 0.4 | 11.5 | 6.3 | 13.9 | 1.6 |
|  | Coefficient of Variation of Transmittance |  | 0.023 | 0.025 | 0.025 | 0.025 | 0.027 | 0.028 |
|  | Flatness |  | ○ | ○ | ○ | ○ | ○ | ○ |
| Battery | Self-discharge (K Value < 0.03) |  | • | • | ○ | • | ○ | ○ |
|  | Rate Characteristics (5C/0.2C) |  | ○ | ○ | • | ○ | • | • |
|  | Cycle Characteristics (500cyclef > 80%) |  | ○ | ○ | ○ | ○ | ○ | ○ |

[Table 2]

|  |  |  | Example 7* | Example 8 | Example 9* | Example 10* | Example 11 | Example 12 |
|---|---|---|---|---|---|---|---|---|
| Composition | UHMWPE | Molecular Weight | $2.0 \times 10^6$ | $2.0 \times 10^6$ | $2.0 \times 10^6$ | $2.0 \times 10^6$ | $2.0 \times 10^6$ | $2.0 \times 10^6$ |
|  |  | Content (wt%) | 40 | 40 | 40 | 18 | 40 | 40 |
|  | HDPE | Molecular Weight | $3.0 \times 10^5$ | $3.0 \times 10^5$ | $3.0 \times 10^5$ | $3.0 \times 10^5$ | $3.0 \times 10^5$ | $3.0 \times 10^5$ |
|  |  | Content (wt%) | 60 | 60 | 60 | 82 | 60 | 60 |
|  | Resin Concentration of Melt-kneaded Product (wt%) |  | 25 | 25 | 25 | 30 | 25 | 25 |

(continued)

| | | | Example 7* | Example 8 | Example 9* | Example 10* | Example 11 | Example 12 |
|---|---|---|---|---|---|---|---|---|
| Production Conditions | First Stretching | Temperature (°C) | 106 | 106 | 110 | 112 | 107 | 110 |
| | | Area Magnification Ratio | 25 | 25 | 25 | 25 | 25 | 25 |
| | Second Stretching | Temperature (°C) | 113 | 113 | - | - | 90 | 110 |
| | | Stretch Ratio (MD) | 1.40 | 1.40 | - | - | 1.90 | 1.30 |
| | | Number of Stretching Stages | 3 | 3 | - | - | 5 | 5 |
| | Third Stretching | Temperature (°C) | 132.0 | 131.5 | 131.0 | 130.0 | 133.0 | 128.0 |
| | | Stretch Ratio (TD) | 1.63 | 1.63 | 1.80 | 1.34 | 2.10 | 2.10 |
| | Relaxation toe-in Temperature (°C) after Third Stretching | | 132.5 | 132.5 | 132.0 | 130.0 | 130.0 | 129.0 |
| | Relaxation Ratio/Stretch Ratio (TD) | | 8%/1.50 | 8%/1.50 | 8%/1.50 | 2% /1.32 | 7%/1.95 | 10% /1.90 |
| Properties | Membrane Thickness (μm) | | 5.3 | 5.5 | 5.3 | 5.3 | 5.0 | 7.1 |
| | Air Permeability (sec/100cm$^3$) | | 141 | 166 | 188 | 137 | 125 | 80 |
| | Porosity (%) | | 36 | 34 | 33 | 32 | 38 | 45 |
| | Basis Weight (g/m2) | | 3.4 | 3.5 | 3.7 | 3.5 | 3.2 | 3.9 |
| | Piercing Strength (mN) | | 2244 | 2715 | 2205 | 2160 | 3460 | 3330 |
| | Tensile Breaking Strength (Mpa) | MD | 218 | 247 | 148 | 181 | 370 | 225 |
| | | TD | 188 | 189 | 257 | 216 | 272 | 222 |
| | | MD/TD | 1.16 | 1.31 | 0.57 | 0.84 | 1.36 | 1.01 |
| | Tensile Breaking Elongation (%) | MD | 62 | 56 | 121 | 152 | 75 | 110 |
| | | TD | 95 | 96 | 65 | 124 | 144 | 128 |
| | Thermal Shrinkage (%) | MD | 2.4 | 3.2 | 3.7 | 3.6 | 3.2 | 4.6 |
| | | TD | 1.5 | 2.2 | 1.2 | 1.6 | 5.5 | 4.4 |
| | Compressive Resistance (1 MPa, 80°C, 1 hr) (%) | | 7.3 | 3.8 | 7.9 | 13.5 | 0.2 | 4.5 |
| | Coefficient of Variation of Transmittance | | 0.028 | 0.028 | 0.025 | 0.025 | 0.028 | 0.023 |
| | Flatness | | ○ | ○ | ○ | ○ | ○ | ○ |

(continued)

|  |  | Example 7* | Example 8 | Example 9* | Example 10* | Example 11 | Example 12 |
|---|---|---|---|---|---|---|---|
| Battery | Self-discharge (K Value < 0.03) | ○ | ○ | ○ | ○ | • | • |
|  | Rate Characteristics (5C/ 0.2C) | × | × | × | × | ○ | • |
|  | Cycle Characteristics (500cyclef > 80%) | × | ○ | × | × | ○ | ○ |
| * Examples 7, 9 and 10 do not illustrate the invention | | | | | | | |

[Table 3]

|  |  |  | Comparative Example 1 | Comparative Example 2 | Comparative Example 3 | Comparative Example 4 | Comparative Example 5 |
|---|---|---|---|---|---|---|---|
| Composition | UHMWPE | Molecular Weight | $2.0 \times 10^6$ | $2.0 \times 10^6$ | $2.0 \times 10^6$ | $2.0 \times 10^6$ | $2.0 \times 10^6$ |
|  |  | Content (wt%) | 40 | 40 | 40 | 18 | 40 |
|  | HDPE | Molecular Weight | $3.0 \times 10^5$ | $3.0 \times 10^5$ | $3.0 \times 10^5$ | $3.0 \times 10^5$ | $3.0 \times 10^5$ |
|  |  | Content (wt%) | 60 | 60 | 60 | 82 | 60 |
|  | Resin Concentration of Melt-kneaded Product (wt%) | | 25 | 25 | 25 | 25 | 25 |
| Production Conditions | First Stretching | Temperature (°C) | 115 | 111 | 110 | 112 | 110 |
|  |  | Area Magnification Ratio | 25 | 25 | 25 | 25 | 25 |
|  | Second Stretching | Temperature (°C) | - | - | - | - | 113 |
|  |  | Stretch Ratio (MD) | - | - | - | - | 1.55 |
|  |  | Number of Stretching Stages | - | - | - | - | 3 |
|  | Third Stretching | Temperature (°C) | 130.4 | 129.0 | 127.0 | 125.0 | 132.0 |
|  |  | Stretch Ratio (TD) | 1.40 | 1.41 | 1.60 | 1.40 | 1.80 |
|  | Relaxation toe-in Temperature (°C) after Third Stretching | | 130.4 | 130.0 | 130.0 | 125.0 | 132.5 |
|  | Relaxation Ratio/Stretch Ratio (TD) | | 2%/1.37 | 11 % / 1.25 | 9%/1.46 | 6%/1.32 | 8%/1.65 |

(continued)

| | | | Comparative Example 1 | Comparative Example 2 | Comparative Example 3 | Comparative Example 4 | Comparative Example 5 |
|---|---|---|---|---|---|---|---|
| Properties | Membrane Thickness ($\mu$m) | | 5.5 | 5.0 | 3.0 | 7.5 | 5.1 |
| | Air Permeability (sec/ 100cm³) | | 110 | 65 | 45 | 60 | 110 |
| | Porosity (%) | | 35 | 41 | 40 | 51 | 40 |
| | Basis Weight (g/m2) | | 3.6 | 3.0 | 1.8 | 3.8 | 3.1 |
| | Piercing Strength (mN) | | 2156 | 2058 | 1568 | 2210 | 2530 |
| | Tensile Breaking Strength (Mpa) | MD | 172 | 202 | 196 | 128 | 288 |
| | | TD | 191 | 200 | 245 | 153 | 208 |
| | | MD/TD | 0.90 | 1.01 | 0.80 | 0.84 | 1.38 |
| | Tensile Breaking Elongation (%) | MD | 96 | 106 | 95 | 133 | 83 |
| | | TD | 94 | 130 | 70 | 107 | 120 |
| | Thermal Shrinkage (%) | MD | 3.5 | 7.0 | 9.2 | 8.9 | 2.5 |
| | | TD | 3.0 | 1.5 | 2.6 | 6.1 | 3.8 |
| | Compressive Resistance (1 MPa, 80°C, 1 hr) (%) | | 20.0 | 16.6 | 26.7 | 21.5 | 17.2 |
| | Coefficient of Variation of Transmittance | | 0.025 | 0.025 | 0.025 | 0.028 | 0.054 |
| | Flatness | | ○ | ○ | ○ | ○ | × |
| Battery | Self-discharge (K Value < 0.03) | | × | × | × | × | × |
| | Rate Characteristics (5C/ 0.2C) | | × | ○ | ○ | • | × |
| | Cycle Characteristics (500cyclef > 80%) | | × | × | × | × | × |

(Evaluation)

The results have revealed that, in Examples 1 to 6, 8, 11 and 12, the polyolefin microporous membranes having a membrane thickness of 3.2 $\mu$m or more and 7.1 $\mu$m or less have a membrane thickness change rate of 0% or more and 15% or less when thermally compressed (1 MPa, 80°C, 1 hr), and have excellent compressive resistance and excellent self-discharge characteristics. The results have confirmed that, among others, the polyolefin microporous membranes having a basis weight of less than 3.4 g/m² or a porosity of 40% or more have excellent rate characteristics and cycle characteristics. However, the polyolefin microporous membranes of Comparative Examples 1 to 5 have a membrane thickness change rate of more than 15% when thermally compressed (1 MPa, 80°C, 1 hr), and have poor self-discharge characteristics or have both poor self-discharge characteristics and poor rate characteristics. Examples 7, 9 and 10 do not illustrate the invention of claim 1.

The above-mentioned results have revealed that a secondary battery having the polyolefin microporous membrane incorporated as a separator has excellent self-discharge characteristics, wherein the polyolefin microporous membrane has a membrane thickness change rate that is within a specific range when the polyolefin microporous membrane is thermally compressed (1 MPa, 80°C, 1hr).

Industrial Applicability

The polyolefin microporous membrane according to the present invention has excellent self-discharge characteristics in cases where the polyolefin microporous membrane is incorporated as a separator in a secondary battery. Accordingly, the polyolefin microporous membrane can be suitably used as a separator for secondary batteries in cases where it is necessary to make the separator thinner.

**Claims**

1. A polyolefin microporous membrane, having a membrane thickness change rate of 0% or more and 15% or less with respect to 100% of the membrane thickness of said polyolefin microporous membrane that was not heated nor compressed, wherein said membrane thickness change rate is measured by the method described in the specification when said polyolefin microporous membrane is compressed under heat at a temperature of 80°C at a pressure of 1 MPa for 60 minutes and is calculated using the equation:

   [(Average Thickness before Compressing - Average Thickness under Compression) / (Average Thickness before Compressing)] x 100;

   and having a tensile strength of 230 MPa or more in the MD direction thereof, measured in accordance with the method of ASTM D882.

2. The polyolefin microporous membrane according to claim 1, wherein said polyolefin microporous membrane satisfies at least one of the conditions: a basis weight of less than 3.4 g/m$^2$ and a porosity of 40% or more.

3. The polyolefin microporous membrane according to claim 1 or 2, having a tensile elongation of 100% or more in the TD direction thereof, measured in accordance with the method of ASTM D882A.

4. A multilayer polyolefin microporous membrane, comprising at least one layer of said polyolefin microporous membrane according to any one of claims 1 to 3.

5. A laminated polyolefin microporous membrane, comprising one or more coating layers on at least one surface of said polyolefin microporous membrane according to any one of claims 1 to 3.

6. A battery, comprising a separator containing said polyolefin microporous membrane according to any one of claims 1 to 3.

**Patentansprüche**

1. Mikroporöse Polyolefinmembran mit einer Membrandickenänderungsrate von 0 % oder mehr und 15 % oder weniger bezogen auf 100 % der Membrandicke der mikroporösen Polyolefinmembran, die weder erhitzt noch gepresst wurde, wobei die Membrandickenänderungsrate durch das in der Beschreibung beschriebene Verfahren gemessen wird, wenn die mikroporöse Polyolefinmembran unter Hitze bei einer Temperatur von 80 °C und einem Druck von 1 MPa 60 Minuten lang gepresst wird, und unter Verwendung der folgenden Gleichung berechnet wird:

   [(mittlere Dicke vor dem Pressen - mittlere Dicke unter Druck) / (mittlere Dicke vor dem Pressen)] x 100;

   und mit einer Zugfestigkeit von 230 MPa oder mehr in ihre MD-Richtung, gemessen gemäß dem Verfahren nach ASTM D882.

2. Mikroporöse Polyolefinmembran nach Anspruch 1, wobei die mikroporöse Polyolefinmembran zumindest eine der folgenden Bedingungen erfüllt: ein Basisgewicht von weniger als 3,4 g/m$^2$ und eine Porosität von 40 % oder mehr.

3. Mikroporöse Polyolefinmembran nach Anspruch 1 oder 2 mit einer Zugdehnung von 100 % oder mehr in ihre TD-Richtung, gemessen gemäß dem Verfahren nach ASTM D882A.

4. Mehrschichtige mikroporöse Polyolefinmembran, die zumindest eine Schicht aus einer mikroporösen Polyolefinmembran nach einem der Ansprüche 1 bis 3 umfasst.

**5.** Laminierte mikroporöse Polyolefinmembran, die eine oder mehrere Beschichtungsschichten auf zumindest einer Oberfläche einer mikroporösen Polyolefinmembran nach einem der Ansprüche 1 bis 3 umfasst.

**6.** Batterie, die einen Separator umfasst, der eine mikroporöse Polyolefinmembran nach einem der Ansprüche 1 bis 3 enthält.

**Revendications**

**1.** Membrane microporeuse de polyoléfine, présentant un taux de changement d'épaisseur de membrane de 0 % ou plus et de 15 % ou moins par rapport à 100 % de l'épaisseur de membrane de ladite membrane microporeuse de polyoléfine qui n'a pas été chauffée ni comprimée, dans lequel ledit taux de changement d'épaisseur de film est mesuré par le procédé décrit dans la description lorsque ladite membrane microporeuse de polyoléfine est comprimée sous chaleur à une température de 80 °C à une pression de 1 MPa pendant 60 minutes, et est calculé à l'aide de l'équation :

[(Épaisseur moyenne avant compression - Épaisseur moyenne sous compression) / (Épaisseur moyenne avant compression)] x 100 ;

et présentant une résistance à la traction de 230 MPa ou plus dans sa direction MD, mesurée conformément au procédé de la norme ASTM D882.

**2.** Membrane microporeuse de polyoléfine selon la revendication 1, dans laquelle ladite membrane microporeuse de polyoléfine satisfait à au moins l'une des conditions : un poids de base inférieur à 3,4 g/m$^2$ et une porosité de 40 % ou plus.

**3.** Membrane microporeuse de polyoléfine selon la revendication 1 ou 2, et présentant un allongement à la traction de 100 % ou plus dans sa direction TD, mesuré conformément au procédé de la norme ASTM D882A.

**4.** Membrane microporeuse de polyoléfine multicouche, comprenant au moins une couche de ladite membrane microporeuse de polyoléfine selon l'une quelconque des revendications 1 à 3.

**5.** Membrane microporeuse de polyoléfine stratifiée, comprenant une ou plusieurs couches de revêtement sur au moins une surface de ladite membrane microporeuse de polyoléfine selon l'une quelconque des revendications 1 à 3.

**6.** Batterie, comprenant un séparateur comprenant ladite membrane microporeuse de polyoléfine selon l'une quelconque des revendications 1 à 3.

**REFERENCES CITED IN THE DESCRIPTION**

**Patent documents cited in the description**

- JP 2014162851 A
- JP 2013256606 A
- WO 2010027065 A
- WO 2010107023 A
- WO 2010058789 A
- WO 201519504 A
- US 2013302696 A
- EP 2604646 A
- WO 2007117042 A
- US 2009226814 A
- WO 2009028734 A
- EP 1920920 A
- EP 2866278 A
- JP 2015194504 A
- JP 2015228358 A
- JP 2004149627 A
- JP 2132327 B
- JP 3347835 B
- WO 2006137540 A
- JP 2002256099 A